# EUROPEAN PATENT APPLICATION

(11) **EP 4 496 204 A1**
(43) Date of publication of application: **22.01.2025**
(21) Application number: 22932058.5
(22) Date of filing: 16.03.2022
(51) Int. Cl.: H02M 7/12

(54) **POWER SUPPLY CIRCUIT**

(71) Applicant: Carrier Japan Corporation, Tokyo 141-0032 (JP)
(72) Inventor: ISHIGAYA, Akihiro, Fuji-shi, Shizuoka 416-8521 (JP); KANOYA, Hiroki, Fuji-shi, Shizuoka 416-8521 (JP); YAMAMOTO, Kenta, Fuji-shi, Shizuoka 416-8521 (JP); IKENO, Koutaro, Fuji-shi, Shizuoka 416-8521 (JP); TERADA, Masanori, Fuji-shi, Shizuoka 416-8521 (JP)
(74) Representative: Gramm, Lins & Partner Patent- und Rechtsanwälte PartGmbB
(86) International application number: PCT/JP2022/011936
(87) International publication number: WO 2023/175779

(57) **Abstract**

A power supply circuit of an embodiment includes a three-phase reactor connected at one end to respective phase terminals of a three-phase AC power source, a converter main circuit composed of six switching elements being three-phase bridge connected, a smoothing capacitor connected across output terminals of the converter main circuit, a voltage detection unit configured to detect a terminal voltage of the smoothing capacitor, a phase detection unit configured to detect a phase of the AC power source, and a control unit configured to divide one cycle of the AC power source into a plurality of periods and exclusively subject each of the six switching elements to switching in the periods in accordance with a turn-on and turn-off pattern determined in advance. The control unit is configured to correct the turn-on and turn-off pattern in the switching such that the terminal voltage to be detected by the voltage detection unit is prevented from fluctuating.

## Description

### Technical Field

Embodiments of the present invention relate to a power supply circuit that converts power of a three-phase AC power source into a direct current.

### Background Art

For example, Patent Literature 1 discloses a technology for reducing an influence of unbalance in input current resulting from voltage unbalance in a three-phase power source by means of switching elements provided on a DC side of a rectifier circuit. Patent Literature 2 discloses a technology for handling voltage unbalance by means of a PWM converter.

### Citation List

### Patent Literature

Patent Literature 1
   Japanese Patent Laid-Open No. 2010-18751
Patent Literature 2
   Japanese Patent Laid-Open No. 1-99478

### Summary of Invention

### Technical Problem

The configuration of Patent Literature 1 solves current unbalance in the three-phase power source but requires a high frequency current associated with switching of a boost chopper to be handled. In the configuration of Patent Literature 2, all of six switching elements are switched in one power source cycle, which raises a problem in that switching losses increase.

Therefore, a power supply circuit is provided which can achieve both handling of voltage unbalance and handling of a high frequency current while reducing switching losses.

### Solution to Problem

A power supply circuit of an embodiment includes a three-phase reactor connected at one end to respective phase terminals of a three-phase AC power source, a converter main circuit composed of six switching elements being three-phase bridge connected, a smoothing capacitor connected across output terminals of the converter main circuit, a voltage detection unit configured to detect a terminal voltage of the smoothing capacitor, a phase detection unit configured to detect a phase of the AC power source, and a control unit configured to divide one cycle of the AC power source into a plurality of periods and exclusively subject each of the six switching elements to switching in the periods in accordance with a turn-on and turn-off pattern determined in advance. The control unit is configured to correct the turn-on and turn-off pattern in the switching such that the terminal voltage to be detected by the voltage detection unit is prevented from fluctuating.

### Brief Description of Drawings

[Figure 1] Figure 1 is a diagram showing a configuration of a motor driving system in which a power supply circuit of a first embodiment is used.
[Figure 2] Figure 2 is a functional block diagram showing a portion that controls a converter main circuit in an internal configuration of a control unit of the embodiment.
[Figure 3] Figure 3 is a diagram showing an example of data stored in a memory of the embodiment.
[Figure 4] Figure 4 is a diagram showing a waveform of each part of the power supply circuit in one cycle of a three-phase AC power source in a case where a voltage of the AC power source is in a balanced state.
[Figure 5] Figure 5 is a diagram showing waveforms of a power source voltage, a power source current, and a terminal voltage V of a smoothing capacitor in a case where the voltage of the three-phase AC power source is in an unbalanced state.
[Figure 6] Figure 6 is a flowchart showing content of processing of a turn-on time correction unit.
[Figure 7] Figure 7 is a diagram describing phase timing at which correction is performed.
[Figure 8] Figure 8 is a waveform diagram describing correction of a turn-on duration.
[Figure 9] Figure 9 is a flowchart showing content of processing of a turn-on time correction unit which is a second embodiment.
[Figure 10] Figure 10 is a diagram describing phase timing at which correction is performed.
[Figure 11] Figure 11 is a waveform diagram describing correction of a duty ratio.

### Description of Embodiment

### (First embodiment)

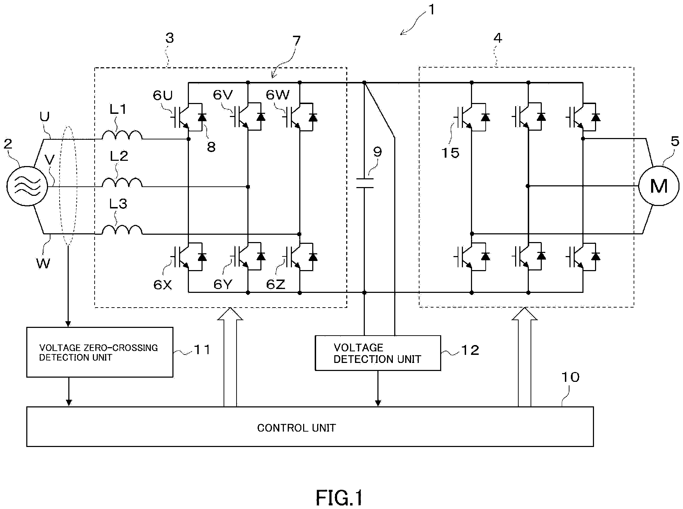

Figure 1 shows a configuration of a motor driving system. A motor driving system 1 includes a power supply circuit 3 that converts AC power of a three-phase AC power source 2 into DC power, an inverter main circuit 4 to be supplied with the DC power, and a motor 5 operated by the inverter main circuit 4. The power supply circuit 3 has a converter main circuit 7 in which IGBTs (Insulated Gate Bipolar Transistors) 6U to 6Z, for example, which are switching elements, are three-phase bridge connected. A freewheeling diode 8 is connected across a collector and an emitter of each of the IGBTs 6U to 6Z. Hereinafter, the IGBTs 6U to 6Z will also be generically called an IGBT 6.

U, V, and W terminals in respective phases of the three-phase AC power source 2 are connected to input terminals in respective phases of the converter main circuit 7 via reactors L1, L2, and L3. Interconnection of the IGBT 6U and the IGBT 6X is connected to a U-phase line U of the three-phase AC power source 2 via the reactor L1. Interconnection of the IGBT 6V and the IGBT 6Y is connected to a V-phase line V via the reactor L2. Interconnection of the IGBT 6W and the IGBT 6Z is connected to a W-phase line W via the reactor L3. A smoothing capacitor 9 is connected between the power supply circuit 3 that outputs a direct current and the inverter main circuit 4. The inverter main circuit 4 is also configured such that IGBTs 15 are three-phase bridge connected similarly to the converter main circuit 7.

The converter main circuit 7 and the inverter main circuit 4 are controlled by a common control unit 10. The control unit 10 includes a microcomputer including a memory and a peripheral circuit of the microcomputer. A voltage zero-crossing detection unit 11 is composed of a component such as a photocoupler for detecting the presence or absence of a voltage and detects a zero-crossing point of an AC voltage waveform at each phase terminal of the three-phase AC power source 2 and inputs a detection result to the control unit 10. A voltage detection unit 12 detects a terminal voltage V which is a voltage across terminals of the smoothing capacitor 9 and inputs a detection result to the control unit 10. Note that the terminal voltage V is also an output voltage of the power supply circuit 3.

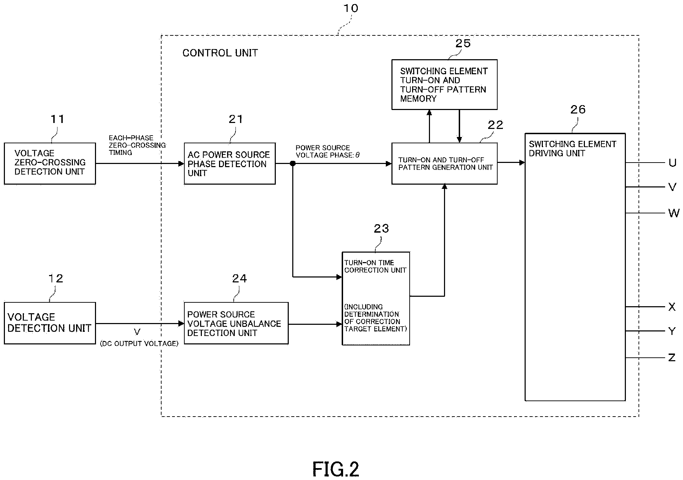

Figure 2 is a functional block diagram showing a portion that controls the converter main circuit 7 in an internal configuration of the control unit 10. Functions of these blocks are actually implemented by a microcomputer executing a program stored in advance. Note that these functional blocks may be set up by a logic circuit. Timing signals indicating zero-crossing points of respective phase voltage waveforms are input to the AC phase detection unit 21 from the voltage zero-crossing detection unit 11. The AC phase detection unit 21 computes a phase angle θ of the power source voltage based on the timing signals and inputs the phase angle θ to a turn-on and turn-off pattern generation unit 22 and a turn-on time correction unit 23. The phase angle θ is determined using any specific phase among the three phases as a basis. The terminal voltage of the smoothing capacitor 9, that is, the DC output voltage V of the power supply circuit 3, is input to a power source voltage unbalance detection unit 24 from the voltage detection unit 12. The power source voltage unbalance detection unit 24 detects unbalance in the voltage of the three-phase AC power source 2 according to a fluctuating state of the DC output voltage V. In other words, unbalance in the voltage of the three-phase AC power source 2 is detected using the fact that fluctuation occurs in the output DC voltage when unbalance occurs in the three-phase power source voltage. This detection signal is input to the turn-on time correction unit 23.

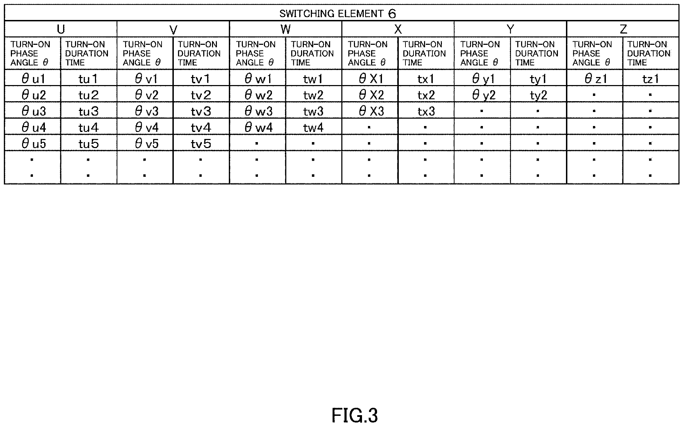

A pattern that periodically turns on and off the six IGBTs 6U to 6Z that constitute the converter main circuit 7 are stored as data in advance in the switching element turn-on and turn-off pattern memory 25 equivalent to a storage unit. Note that the switching element turn-on and turn-off pattern memory 25 will also be briefly referred to as the memory 25. Figure 3 shows an example of data stored in the memory 25. The turn-on phase angle and the turn-on duration are stored as a set of data for each of the IGBTs 6U to 6Z. The turn-on and turn-off pattern generation unit 22 reads out the data on the turn-on and turn-off pattern from the memory 25 in accordance with the phase angle θ and inputs the data to a switching element driving unit 26.

In other words, the turn-on and turn-off pattern generation unit 22 outputs, when the phase angle θ becomes the turn-on phase angle stored in the memory 25, a signal for turning on a relevant one of the switching elements and after continuing a turn-on state for the turn-on duration, outputs a signal for turning off the switching element. For example, when θ reaches θv3, a turn-on signal for the IGBT 6V is output, a turn-on state thereof is maintained for a time period tv3, and thereafter, a turn-off signal for the IGBT 6V is output. The switching element driving unit 26 inputs a driving signal to a gate of the IGBT 6 in the respective phases of U, V, W and X, Y, Z that constitute the converter main circuit 7 based on a signal input from the turn-on and turn-off pattern generation unit 22. Herein, such a period in which any of the IGBTs 6U to 6Z are not turned on simultaneously is set in the turn-on and turn-off pattern stored in the memory 25. In other words, each of the six switching elements, the IGBTs 6U to 6Z, is exclusively switched.

When an unbalance detection signal is input from the power source voltage unbalance detection unit 24, the turn-on time correction unit 23 inputs, to the turn-on and turn-off pattern generation unit 22, a signal for correcting the turn-on duration in the turn-on and turn-off pattern data to be input to the switching element driving unit 26 by the turn-on and turn-off pattern generation unit 22 together with a phase of the IGBT 6 to be targeted for correction in accordance with the phase angle θ at detected timing.

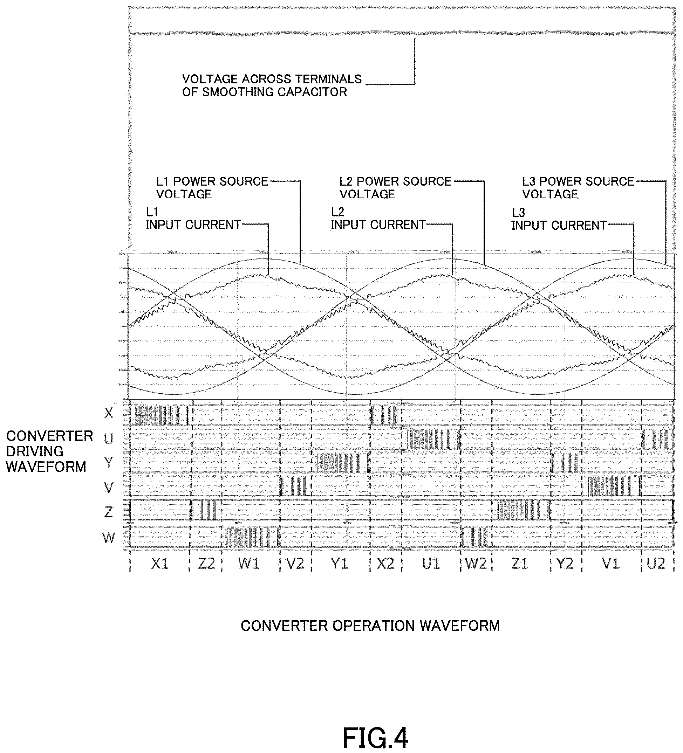

Figure 4 shows a waveform of each part in one cycle of the AC power source in a case where the voltage of the three-phase AC power source 2 is in a balanced state. Voltage and current waveforms of the three-phase AC power source 2 and a voltage waveform of the smoothing capacitor 9 are shown at the top of the diagram. L1 to L3 power source voltages and input currents indicate waveforms of voltages and currents input to the power supply circuit 3 from the three-phase AC power source 2 via the respective reactors L1 to L3. In a portion showing a switching operation of the power supply circuit 3 on the lowermost stage, the IGBTs 6U to 6Z in the respective phases are aligned on the vertical axis, and X1, Z2, W1, V2, ... on the horizontal axis indicate periods in which only one of the IGBTs 6U to 6Z in the respective phases that constitute the converter main circuit 7 is exclusively switched. For example, in the periods X1 and X2, only the IGBT 6X is switched, and in the periods Z2 and Z1, only the IGBT 6Z is switched. As described, one cycle of the three-phase AC power source 2 is divided into twelve periods, and each of the IGBTs 6U to 6Z in the respective phases is exclusively switched in two periods among the twelve periods.

The period in which each of the IGBTs 6U to 6Z in the respective phases is switched corresponds to a rising or falling period of a rectified waveform of a connected AC voltage. By controlling the IGBTs 6 as described, a current in each phase of the three-phase AC power source 2 presents a shape close to a sinusoidal wave as shown in Figure 4, so that power factor improvement and reduction of harmonics can be achieved.

Note that for the turn-on and turn-off pattern data on each of the IGBTs 6U to 6Z stored in the memory 25, the number of turn-ons in each of the twelve periods in one cycle is preferably approximately one to ten times and desirably better to be approximately three to ten times. If the number of turn-ons is small, current rising and falling become small, and the current waveform will be deformed from the sinusoidal wave. On the other hand, if the number of turn-ons is large, switching noise increases and the efficiency degrades. Thus, optimum turn-on timing, the phase angle, the number of turn-ons, and the turn-on duration at each turn-on are determined in advance by an examination in a state where the power source voltage of the three-phase AC power source 2 is balanced. This optimized turn-on and turn-off pattern data is stored in the memory 25.

Since the current change on the rising side of the rectified voltage waveform of the three-phase AC power source 2 is less responsive than the current change on the falling side, the number of times of switching on the rising side of the rectified voltage waveform is made larger than the number of times of switching on the falling side. Similarly, for the turn-on duration, the turn-on duration on the rising side of the rectified voltage waveform is also made longer than the turn-on duration on the falling side.

Note that since the voltage waveforms in the respective phases U, V, and W of the three-phase AC power source 2 have a similar figure with the respective phase angles shifted by 120°, that is, 2π/3, values shifted by 120° can also be used for the turn-on phase angle and the turn-on duration of the IGBTs 6U to 6Z in the respective phases. In this case, as data to be stored in the memory 25, only the turn-on phase angle and the turn-on duration of a specific one of the IGBTs 6 may be stored rather than for each of the IGBTs 6U to 6Z which are switching elements as shown in Figure 3. For example, only the turn-on phase angle and the turn-on duration of the U-phase IGBT 6U are stored, and for a driving pattern of the V-phase IGBT 6V, a value obtained by adding 2π/3 to the turn-on phase angle of the U-phase IGBT 6U stored in the memory 25 is used. The turn-on duration is used here as it is. In other words, with reference to Figure 3, a turn-on phase angle θvn of the V-phase IGBT 6V becomes equal to θun + 2π/3 (n = 1, 2, 3 ...), for example. Similarly, a turn-on phase angle θwn of the W-phase IGBT 6W becomes equal to θun - 2π/3. This method can reduce the amount of stored data, which can reduce the memory 25 in capacity.

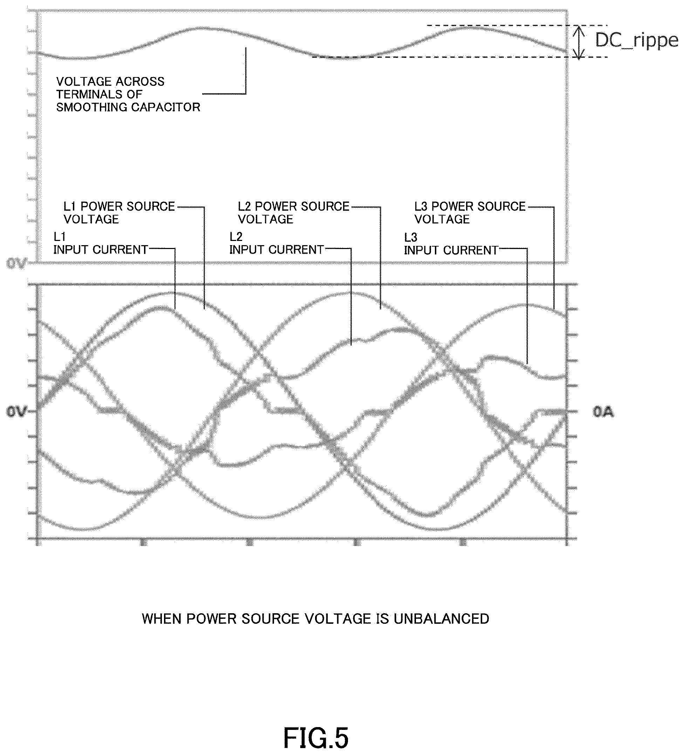

Figure 5 shows a waveform of the terminal voltage V in a case of the unbalanced state. The example shown in Figure 5 shows a waveform of each part in a case of performing the switching operation shown in Figure 4 in a situation where the voltage in the W phase has decreased. When in such an unbalanced state, the currents in the respective phases become unbalanced even if the IGBTs 6 are controlled as described above, and the current waveforms are also deformed from the sinusoidal waveform, which increases harmonics. Then, a difference occurs in magnitude among the currents in the respective phases. The peak value of the U-phase reactor current L1 of the three-phase AC power source 2 becomes the largest, and the W-phase reactor current L3 becomes the smallest. Moreover, the ripple of the terminal voltage V, that is, DC ripple, increases due to the difference in magnitude among the currents in the respective phases.

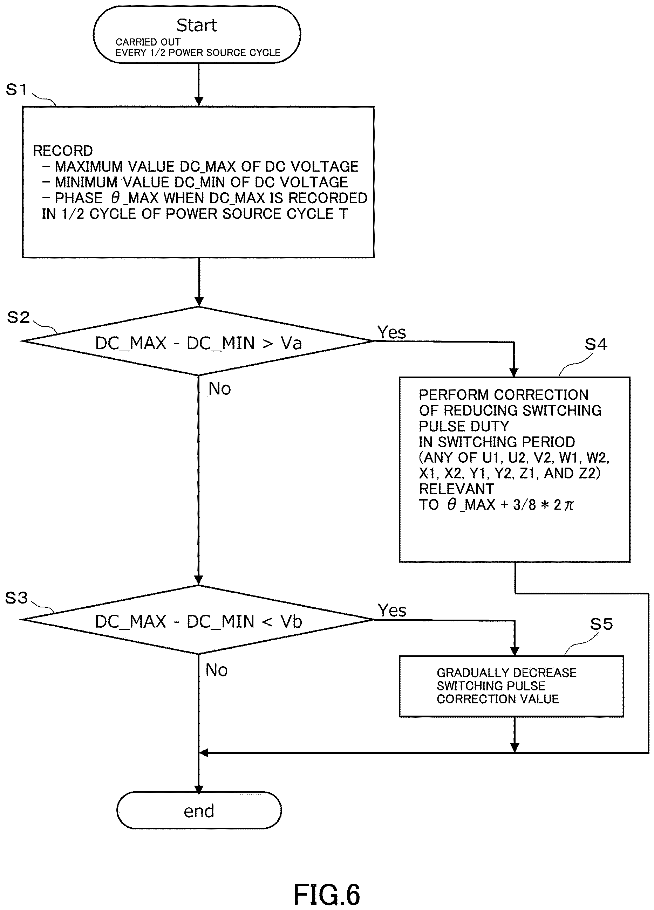

Next, actions of the present embodiment will be described. Figure 6 is a flowchart showing content of processing of the turn-on time correction unit 23. This processing is executed every half cycle of the AC power source. Note that "DC voltage" in the diagram indicates the terminal voltage V. First, at 1/2 a power source cycle T, a maximum value DC_MAX and a minimum value DC_MIN of the terminal voltage V are recorded, and a phase θ_MAX at a time point when the maximum value DC_MAX is recorded is recorded (S1).

Subsequently, it is determined whether or not a difference between the maximum value DC_MAX and the minimum value DC_MIN has exceeded a threshold value Va (S2). The above-described difference is a fluctuating range of the voltage ripple, and the threshold value Va is set at such a magnitude that it is determined by the fluctuating range that the voltage of the AC power source 2 is in the balanced state. When it is determined "YES" here, a duty ratio of a switching pulse is corrected to be small in a switching period relevant to a phase (θ_MAX + 3/8 × 2π), that is, any of the twelve periods U1 to Z2 (S4).

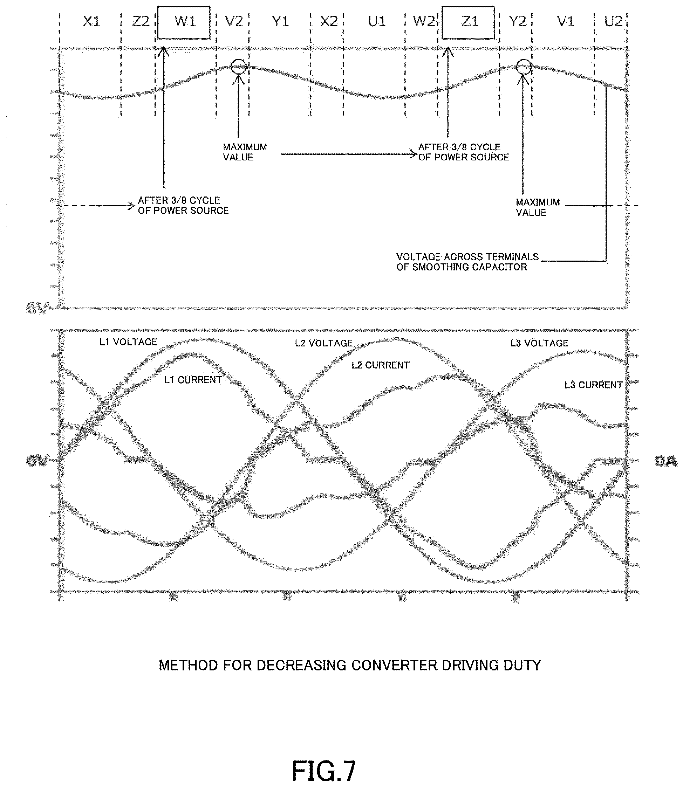

The phase (θ_MAX + 3/8 × 2π) will be described here. As shown in Figure 7, the ripple of the terminal voltage V has a cycle of 1/2 the power source cycle T. Then, as a result of an examination performed by the inventors, it has been found out that for correcting the duty ratio of the switching pulse, that is, the turn-on duration, so as to decrease the maximum value of the fluctuating terminal voltage V, it is optimum to correct the duty ratio in a decreasing direction from the above-described fluctuation cycle at timing on the advancing side by a 1/8 cycle from the phase indicating the maximum value DC_MAX. Such control enabled the next maximum value after 1/8 cycle therefrom to be decreased.

Consequently, by correcting the turn-on duration to be decreased at timing after 3/8T from the time point when the maximum value DC_MAX is presented, a turn-on time ratio of the IGBT 6 to be subjected to a switching operation in the period can be decreased to correct the maximum value of the terminal voltage V in the next half cycle. Herein, the timing after 3/8T is nothing other than timing on the advancing side from the next phase presenting the maximum value DC_MAX by a 1/8 cycle. The phase (θ_MAX + 3/8 × 2π) is set based on this in step S3.

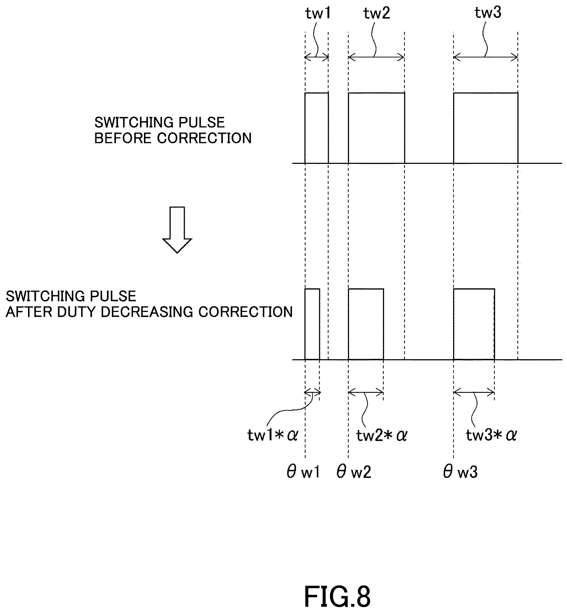

In the example shown in Figure 7, since the period presenting the maximum value DC_MAX is V2, and a period after 3/8T therefrom is the period Z1 in which the IGBT 6Z is driven, the duty ratio of the turn-on and turn-off pattern for the IGBT 6Z output in the period Z1, that is, the turn-on duration, is decreased. Specifically, at timing of a turn-on phase angle θz1 shown in Figure 3, a turn-on duration tz1 is changed to (tz1 × α). Here, α is a correction coefficient and takes a positive value smaller than 1. All of turn-on durations tzn in the period is multiplied by this. Since the next period presenting the maximum value DC_MAX is Y2, a period after 3/8T therefrom is the period W1 in which the IGBT 6W is driven. Thus, the turn-on duration in the turn-on and turn-off pattern for the IGBT 6W output in the period W1 is decreased as shown in Figure 8. In the diagram, turn-on durations t_{w1}, t_{w2}, and t_{w3} before correction in which phases θ_{w1}, θ_{w2}, and θ_{w3} are each brought into turn-on timing are multiplied by the correction coefficient α to decrease the turn-on durations.

When it is determined "NO" in step S2, it is determined whether or not the difference between the maximum value DC_MAX and the minimum value DC_MIN has fallen below a threshold value Vb (S3). Note that the threshold value Vb is set at a value smaller than the threshold value Va to give a hysteresis for preventing frequent fluctuation in control. Here, if the above-described difference is more than or equal to the threshold value Vb, "NO" processing is terminated, and the above-described difference falls below the threshold value Vb (YES), the correction coefficient α to be used in the correction performed in step S4 is gradually increased toward "1" to extend the turn-on duration of the IGBT 6 (S5). The correction coefficient α is increased little by little each time this step S5 is executed, and when the correction coefficient α reaches "1", nothing is performed. That is, the correction amount of the turn-on duration will decrease in association with the gradual increase of the correction coefficient α.

According to the present embodiment as described, the power supply circuit 3 includes the reactors L1 to L3 connected at one end to the respective phase terminals of the three-phase AC power source 2, the converter main circuit 7, the smoothing capacitor 9 connected across the output terminals of the converter main circuit 7, the voltage detection unit 12 that detects the terminal voltage V of the smoothing capacitor 9, the AC phase detection unit 21 that detects the phase of the AC power source 2, and the control unit 10 that divides one cycle of the AC power source 2 into the twelve periods and exclusively subjects each of the six IGBTs 6 to switching for two periods each in these periods in accordance with the turn-on and turn-off pattern determined in advance. Then, the control unit 10 corrects the turn-on and turn-off pattern of the IGBT 6 so as to prevent the terminal voltage V from fluctuating. Such a configuration enables both handling of the voltage unbalance and handling of the high frequency current to be achieved while reducing switching losses of the IGBTs 6.

The control unit 10 includes the memory 25 that stores the turn-on and turn-off pattern in advance, and selects the IGBT 6 using the stored turn-on and turn-off pattern to perform turn-on and turn-off control. Then, when fluctuation in the terminal voltage V in the half cycle of the AC power source 2 exceeds the threshold value Va, the IGBT 6 to be operated at a time point when a certain period elapses from a time point when the fluctuation presents the maximum value DC_MAX is corrected such that the ratio of the turn-on time in the turn-on and turn-off pattern is decreased. The certain period is set at 3/8 of the cycle of the AC power source 2. This enables voltage unbalance to be reliably prevented. Then, since the control unit 10 decreases the correction amount when the fluctuation falls below the threshold value while the correction is being performed, the correction can be terminated without increasing the fluctuation. The terminal voltage V can thus be prevented from fluctuating even if voltage unbalance of the three-phase AC power source 2 occurs, and if the voltage unbalance of the three-phase AC power source 2 is solved, a return can be made to original control.

### (Second embodiment)

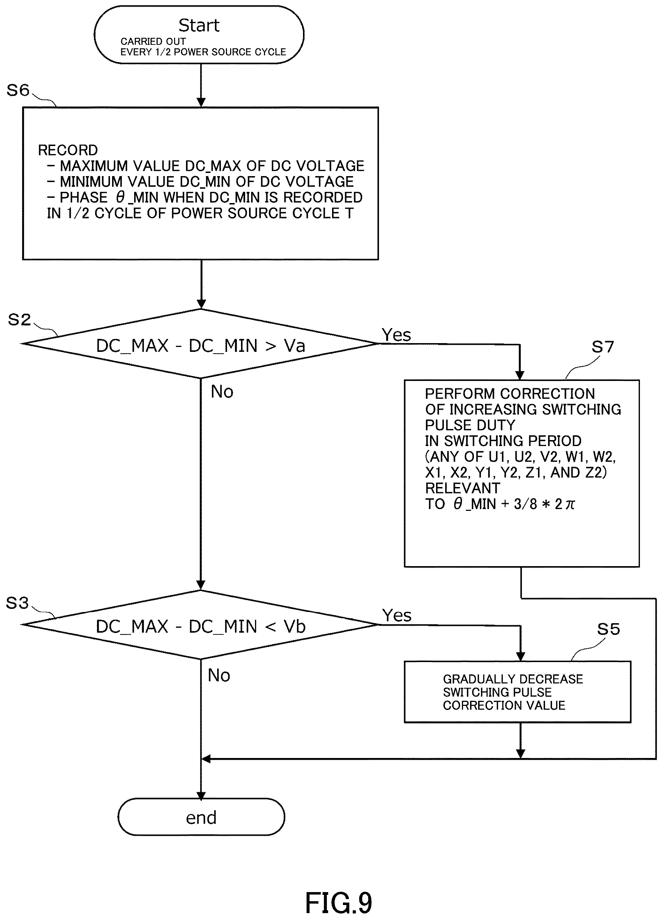

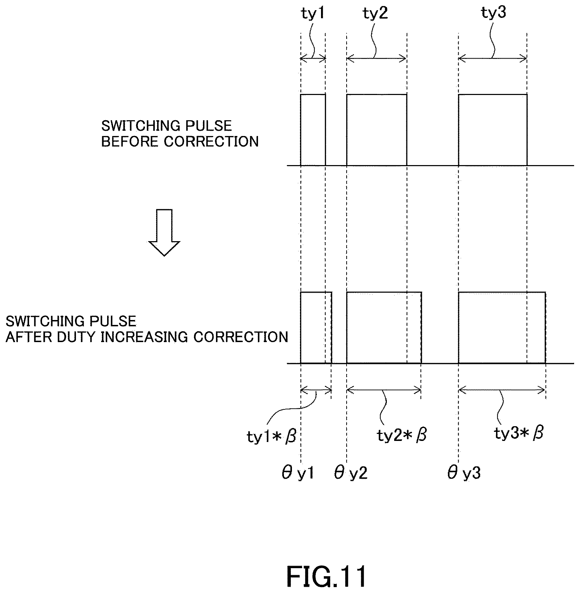

Hereinafter, portions identical to portions of the first embodiment are denoted by identical reference characters, description of which will be omitted, and different portions will be described. The first embodiment performs correction using the maximum value DC_MAX as a base point, whilst the second embodiment performs correction using the minimum value DC_MIN as a base point. As shown in Figure 9, in step S6 alternative to step S1, a phase θ_MIN at a time point when the minimum value DC_MIN is recorded is recorded instead of the maximum value DC_MAX. Then, in step S7 alternative to step S4, correction is performed so as to increase the turn-on duration of the switching pulse in any of the twelve switching periods, as shown in Figure 11.

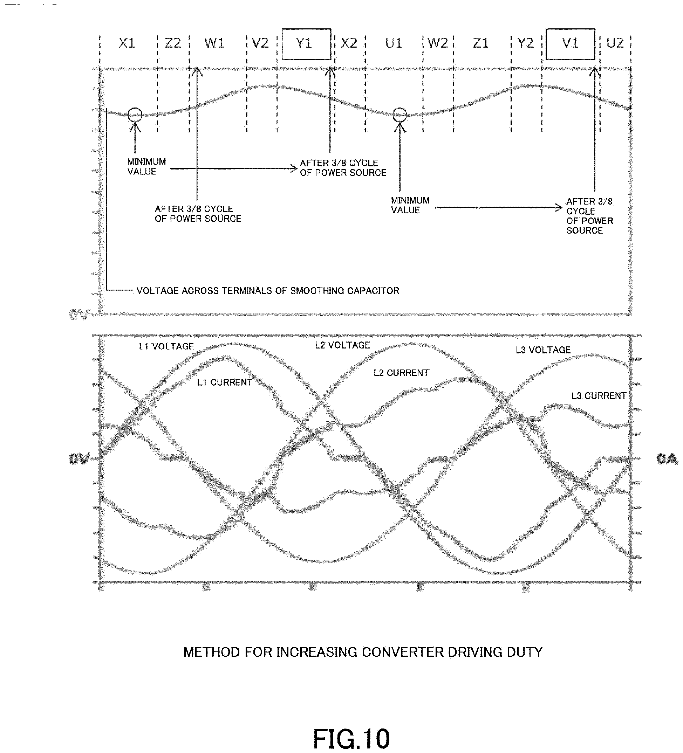

As shown in Figure 10, the phase relationship is similar even if the maximum value DC_MAX is replaced by the minimum value DC_MIN, and by performing correction of increasing the turn-on duration at timing of 3/8T after the timing when the minimum value DC_MIN is presented, the minimum value of the terminal voltage V in the next half cycle can be increased. When the minimum value of the terminal voltage V is increased, the difference from the maximum value becomes smaller, and the ripple of the terminal voltage V of the smoothing capacitor 9 decreases. In the example shown in the diagram, a period in which the minimum value DC_MIN is presented is X1, and a period after 3/8T therefrom is the period Y1. Thus, the turn-on duration in the turn-on and turn-off pattern to be output in the period Y1 is increased. Since the next period in which the minimum value DC_MIN is presented is U1, a period after 3/8T therefrom is the period V1. Thus, the turn-on duration in the turn-on and turn-off pattern to be output in the period V1 is increased.

As a method for increasing the turn-on duration, the turn-on duration in the turn-on and turn-off pattern is multiplied by a correction coefficient β. Here, β shall be a number more than or equal to 1. In the example of the IGBT 6Y shown in Figure 11, turn-on durations t_{y1}, t_{y2}, and t_{y3} before correction in which phases θ_{y1}, θ_{y2} and θ_{y3} are each brought into turn-on timing are multiplied by the correction coefficient β to increase the turn-on duration.

According to the second embodiment as described above, effects similar to the effects of the first embodiment can be obtained. However, in the case of performing correction of increasing the turn-on duration as in the second embodiment, the power source current in a specific phase will be increased, so that a failure such as overcurrent might occur. Thus, correction of decreasing the turn-on duration as in the first embodiment is preferable depending on the device.

### (Other embodiments)

The threshold values Va and Vb may be set at the same value.

The switching elements are not limited to IGBTs and may be MOSFETs, bipolar transistors, or the like.

The power supply circuit 3 and the inverter main circuit 4 may be controlled by separate control units, respectively.

Although one cycle of the AC voltage of the three-phase AC power source 2 is divided into the twelve periods, the respective divided periods do not need to be equal per 30°. In general, making the rising side of a rectified waveform of the AC voltage longer and the falling side shorter is more effective in power factor improvement and reduction of harmonics. Thus, the period on the rising side may be set at 35°, and the period on the falling side may be set at 25°. This change in period can be easily made by rewriting the turn-on phase angle θ in the memory data shown in Figure 3. Note that the sum of both the periods is 60°, which cannot be changed.

As the method for correcting the turn-on duration stored in the memory 25, an individual turn-on duration is multiplied by the correction coefficient α or β. However, in the case of increasing the turn-on duration, a correction value having a positive value may be added to the turn-on duration, and in the case of decreasing the turn-on duration, a correction value having a positive value may be subtracted from the turn-on duration.

Since it is only necessary if the terminal voltage V can be prevented from fluctuating, correction may be performed such that when the fluctuation in the terminal voltage V in the half cycle of the AC power source 2 exceeds the threshold value Va, the turn-on and turn-off pattern of the IGBT 6 relevant to the period in which it is to be operated from a time point when the fluctuation presents the maximum value DC_MAX to a time point when 3/8 of the cycle of the AC power source 2 is reached remains the same, and the ratio of the turn-on time of the IGBT 6 in a period other than the relevant period is increased. Then, the turn-on duration of the IGBT 6 in a period other than the relevant period increases, and the current increases accordingly. As a result, the terminal voltage V can be prevented from fluctuating.

Similarly, when the fluctuation in the terminal voltage V in the half cycle of the AC power source 2 exceeds the threshold value Va, the turn-on duration in the turn-on and turn-off pattern may be decreased in a period other than a period after 3/8T (cycle) from a time point when the minimum value DC_MIN is presented. However, these methods lower a utilization rate of the turn-on and turn-off pattern optimized and stored in the memory 25, which might increase harmonics as compared with the first and second embodiments.

Although some embodiments of the present invention have been described, these embodiments are presented as examples and are not intended to limit the scope of the invention. These new embodiments can be implemented in other various forms and can be variously omitted, replaced, and changed without departing from the spirit of the invention. These embodiments and modifications thereof are included in the scope and spirit of the invention and are included in the invention recited in claims and the scope equivalent thereto.

### Reference Signs List

In the drawings, reference numerals are denoted as follows:
1 motor driving system
2 three-phase AC power source
3 power supply circuit
4 inverter main circuit
5 motor
6 IGBT
7 converter main circuit
9 smoothing capacitor
10 control unit
11 voltage zero-crossing detection unit
12 voltage detection unit
23 turn-on time correction unit
24 power source voltage unbalance detection unit (unbalance detection unit)
25 switching element turn-on and turn-off pattern memory (storage unit)

## Claims

1. A power supply circuit comprising:
a three-phase reactor connected at one end to respective phase terminals of a three-phase AC power source;
a converter main circuit composed of six switching elements being three-phase bridge connected;
a smoothing capacitor connected across output terminals of the converter main circuit;
a voltage detection unit configured to detect a terminal voltage of the smoothing capacitor;
a phase detection unit configured to detect a phase of the AC power source; and
a control unit configured to divide one cycle of the AC power source into a plurality of periods and exclusively subject each of the six switching elements to switching in the periods in accordance with a turn-on and turn-off pattern determined in advance, wherein
the control unit is configured to correct the turn-on and turn-off pattern in the switching such that the terminal voltage to be detected by the voltage detection unit is prevented from fluctuating.

2. The power supply circuit according to claim 1, wherein
the control unit includes a storage unit configured to store the turn-on and turn-off pattern in advance, and
one of the switching elements is selected and subjected to turn-on and turn-off control using the turn-on and turn-off pattern stored in the storage unit.

3. The power supply circuit according to claim 2, wherein the storage unit is configured to store, as the turn-on and turn-off pattern, turn-on timing and a turn-on duration of a specific one of the switching elements.

4. The power supply circuit according to any one of claims 1 to 3, wherein the control unit is configured to, when fluctuation in the terminal voltage in a half cycle of the AC power source exceeds a threshold value, perform correction so as to decrease a turn-on duration in the turn-on and turn-off pattern of one of the switching elements to be operated at a time point when a certain period elapses after a time point when the fluctuation presents a maximum value.

5. The power supply circuit according to any one of claims 1 to 3, wherein the control unit is configured to, when fluctuation in the terminal voltage in a half cycle of the AC power source exceeds a threshold value, perform correction so as to increase a turn-on duration in the turn-on and turn-off pattern of one of the switching elements to be operated at a time point when a certain period elapses after a time point when the fluctuation presents a minimum value.

6. The power supply circuit according to claim 4 or 5, wherein the control unit is configured to decrease a correction amount when the fluctuation falls below the threshold value while the correction is being performed.

7. The power supply circuit according to any one of claims 4 to 6, wherein the certain period is 3/8 of the cycle of the AC power source.

8. The power supply circuit according to any one of claims 1 to 7, wherein the plurality of periods obtained by dividing the one cycle of the AC power source are twelve periods.

9. The power supply circuit according to claim 8, wherein periods in which each of the six switching elements is exclusively subjected to the switching are two periods among the twelve periods.

10. The power supply circuit according to claim 9, wherein one of the switching elements to be exclusively subjected to the switching by the control unit is one of the switching elements that corresponds to a rising or falling period of an AC voltage waveform obtained by subjecting the three-phase AC power source to full-wave rectification in the two periods.

11. The power supply circuit according to any one of claims 8 to 10, wherein a length of each of the twelve periods is changeable.

12. A power supply circuit comprising:
a three-phase reactor connected at one end to respective phase terminals of a three-phase AC power source;
a converter main circuit composed of six switching elements connected to the three-phase AC power source via the three-phase reactor, the six switching elements being three-phase bridge connected, the converter main circuit being configured to output a DC voltage;
an unbalance detection unit configured to detect unbalance in a voltage of the three-phase AC power source;
a phase detection unit configured to detect a phase of the AC power source; and
a control unit configured to divide one cycle of the AC power source into a plurality of periods and exclusively subject each of the six switching elements to switching in the periods in accordance with a turn-on and turn-off pattern determined in advance, wherein
the control unit is configured to, in a case where the unbalance is detected by the unbalance detection unit, correct the turn-on and turn-off pattern in the switching such that an output voltage of the converter main circuit is prevented from fluctuating.
